# EUROPÄISCHE PATENTSCHRIFT

(11) **EP 0 699 552 B1**
(45) Veröffentlichungstag und Bekanntmachung des Hinweises auf die Patenterteilung: **05.11.1997**
(21) Anmeldenummer: 95113151.5
(22) Anmeldetag: 22.08.1995
(51) Int. Cl.: B60K 41/00, B62D 1/04

(54) **Vorrichtung zur Handbetätigung des Leistungsreglers eines Kraftfahrzeuges**
Device for the manual actuation of the power control member of a motor vehicle
Dispositif pour l'actionnement manuel de l'organe de réglage de la puissance d'un véhicule à moteur

(30) Priorität: 01.09.1994 DE 4431098
(43) Veröffentlichungstag der Anmeldung: 06.03.1996
(73) Patentinhaber: Haag, Claus, 76684 Östringen (DE)
(72) Erfinder: Haag, Claus, 76684 Östringen (DE)
(74) Vertreter: Lemcke, Rupert, Dipl.-Ing.

(56) Entgegenhaltungen:
- EP-A- 0 114 673
- EP-A- 0 324 531
- EP-A- 0 634 301
- WO-A-93/19948
- GB-A- 2 219 637
- US-A- 4 078 628
- US-A- 5 103 125

## Beschreibung

Die Erfindung betrifft eine Vorrichtung zur Handbetätigung des Leistungsreglers eines Kraftfahrzeuges mit einem auf der Lenkspindel befestigten Lenkrad, ferner mit einem Betätigungsrad, das gegenüber dem Lenkrad axial verschiebbar und mit diesem zusammen drehbar ist, sowie mit einer Anordnung zur Übertragung der Axialverschiebung des Betätigungsrades für die Betätigung des Leistungsreglers, wozu das am Lenkrad axial verschiebbar geführte Betätigungsrad mit dem Stellteil eines Sollwertpotentiometers verbunden ist, ein durch einen am Kraftfahrzeug befestigten Stellmotor betätigbares Stellglied mit dem Leistungsregler in Verbindung steht, die Position des Stellgliedes durch ein mit ihm bzw. dem Stellmotor verbundenes Istwertpotentiometer abfühlbar ist, sowie der Stellmotor durch eine Regel- und Steuereinheit jeweils bis zum Abgleich der von den Potentiometern gelieferten Werte betätigbar ist.

Mit Hilfe einer derartigen aus der US-A-4078628 bekannten Vorrichtung können körperbehinderte Personen, die nicht in der Lage sind, mit dem Fuß z. B. das Fahrpedal, landläufig Gaspedal genannt, zu betätigen, den Leistungsregler von Hand betätigen. Das ist beim Otto-Motor die Drosselklappe des Vergasers, beim Diesel-Motor die Einspritzpumpe und beim Elektro-Motor ein Stellglied in dessen Stromzufuhr. Üblicherweise geht man jedoch mit der Handbetätigung unmittelbar auf das Fahrpedal, um die Einrichtung zu vereinfachen und um das Fahrzeug auch für den normalen Gebrauch ausgerüstet zu halten. Daher ist nachfolgend auf die Handbetätigung des Fahrpedals Bezug genommen, ohne daß dadurch jedoch die genannte direkte Leistungsregelung des Kraftfahrzeugmotors ausgeschlossen sein soll.

Bekannte Vorrichtungen der eingangs genannten Art arbeiten mechanisch mit Hilfe eines zur Lenksäule parallelen Gestänges zwischen Betätigungsrad und Sollwertpotentiometer oder Fahrpedal. Eine solche Vorrichtung ist gerade im Bereich des Lenkrades und der Lenksäule platzgreifend und aufwendig, wodurch insbesondere der nachträgliche Einbau in serienmäßig hergestellte Kraftfahrzeuge erschwert ist. Außerdem erschwert sie die Anbringung eines Airbags innerhalb des Lenkrades oder macht diese gar unmöglich.

Aufgabe der Erfindung ist es daher, eine Vorrichtung der eingangs genannten Art so anders aufzubauen und zu gestalten, daß innerhalb des Lenkrades ein Airbag in der bei Serienfahrzeugen üblichen Weise angebracht sein kann. Darüber hinaus soll die Vorrichtung im Bereich des Lenkrades und der Lenksäule kaum Platz beanspruchen und bei Serienfahrzeugen leicht nachträglich anzubringen sein.

Diese Aufgabe ist erfindungsgemäß dadurch gelöst, daß das Sollwertpotentiometer an der Lenkradnabe befestigt ist, daß das Betätigungsrad über von ihm ausgehende stangenförmige Mittel in einem an der Lenkradnabe befestigten Gehäuse geführt ist, und daß die stangenförmigen Mittel sowie das Stellteil des Sollwertpotentiometers von einer das Betätigungsrad durchquerenden, stabförmigen Sehne ausgehen.

Die erfindungsgemäßen Maßnahmen haben die Wirkung, daß am Lenkrad nur das Betätigungsrad axial zu führen und ein Sollwertpotentiometer anzubringen ist, was wenig Platz in Anspruch nimmt und leicht so angeordnet werden kann, daß das Lenkrad mit einem Airbag in serienüblicher Weise ausgestattet sein kann. Die Regel- und Steuereinheit sowie Stellmotor, Stellglied und Istwertpotentiometer können entfernt davon, in üblicher Weise nur durch eine elektrische Verbindung gekoppelt an geeigneter Stelle im Kraftfahrzeug untergebracht sein, wo für sie Platz ohnehin vorhanden ist.

Auch die nachträgliche Montage der erfindungsgemäßen Vorrichtung ist einfach, da praktisch der gesamte Lenksäulenbereich einmal von der elektrischen Verbindungsleitung abgesehen unbeeinträchtigt bleibt, also der Einbau an von außen leicht zugänglichen Stellen erfolgen kann.

Darüber hinaus ist die erfindungsgemäße Handbetätigung des Fahrpedals ohne besonderen Kraftaufwand zu bedienen, da neben dem Betätigungsrad lediglich das Stellteil des Sollwertpotentiometers zu bewegen ist, nicht jedoch ein umfangreiches Verbindungsgestänge zum Fahrpedal. Daher ist die erfindungsgemäße Handbetätigung auch für solche Personen geeignet, deren Arme und Hände in ihrer Kraft beeinträchtigt sind.

Für die Führung des Betätigungsrades am Lenkrad hat es sich als zweckmäßig erwiesen, daß das Betätigungsrad über wenigstens zwei von ihm ausgehende, achsparallele Stangen in dem an der Lenkradnabe befestigten Gehäuse geführt ist.

In diesem Zusammenhang kann vorgesehen sein, daß das Betätigungsrad aus einer Ruheposition, die dem Leerlauf des Kraftfahrzeugmotors entspricht, gegen die Wirkung einer Rückstellkraft verschiebbar ist, die durch eine am Festteil des Sollwertpotentiometers abgestützte Rückstellfeder gebildet sein kann.

Für das Sollwertpotentiometer kommt grundsätzlich sowohl eine Ausbildung als Linearpotentiometer als auch eine Ausbildung als Drehpotentiometer in Frage. Zweckmäßig dürfte im allgemeinen die Verwendung eines Linearpotentiometers sein wegen der axialen Verschiebungsbewegung des Betätigungsrades, die dann zu ihrer Umsetzung auf das Potentiometer nicht noch zusätzlicher Hebel bedarf.

Was die elektrische Verbindung zwischen Sollwertpotentiometer und Regel- und Steuereinheit betrifft, so kann in dieser in an sich bekannter Weise eine bewegliche Verbindung über einen Schleifring mit Schleifringkontakten vorgesehen sein.

Bezüglich des Stellmotors ist es vorteilhaft, einen in beiden Richtungen drehantreibbaren Stellmotor zu verwenden, für dessen Ausbildung wegen der ohnehin vorhandenen elektrischen Versorgung die Verwendung eines Elektromotors in Frage kommt. Jedoch ist auch die Verwendung eines Hydraulikmotors denkbar im Hinblick auf die zumindest bei Kraftfahrzeugen mit Verbrennungsmotoren vorhandene Versorgung mit Drucköl.

Auch für das Stellglied des Stellmotors sind zahlreiche geeignete Ausführungsformen denkbar. Als zweckmäßig erscheint es, daß das Stellglied des Stellmotors ein durch den Stellmotor verschwenkbarer Hebelarm ist, und daß am freien Ende des Hebelarmes ein vom Leistungsregler ausgehendes Verbindungsglied angelenkt ist, welches vorteilhafterweise ein starres Bauteil ist.

Aus Sicherheitsgründen kann zwischen Stellmotor und Stellglied eine durch die Regel- und Steuereinheit schaltbare Kupplung angeordnet sein, die elektrisch gegen die Wirkung einer sie lösenden Kraft einschaltbar ist. Hiermit ist dafür gesorgt, daß bei einem eventuellen Stromausfall das Fahrpedal unter der Wirkung der üblicherweise angreifenden Rückholfeder in die Leerlaufstellung zurückgeführt wird, da dann die Verbindung zwischen Stellmotor und Stellglied unterbrochen ist.

Im gleichen Sinne ist es vorteilhaft, daß die Regel- und Steuereinheit mit dem Bremslichtschalter sowie gegebenenfalls mit Airbagsensoren in Verbindung steht, und daß bei deren Betätigung das Stellglied durch den Stellmotor sowie das Istwertpotentiometer in die dem Leerlauf des Kraftfahrzeugantriebes entsprechende Position rückführbar und/oder die Kupplung lösbar ist. Auch hiermit ist also dafür Sorge getragen, daß der Kraftfahrzeugantrieb im Falle des Bremsens oder in einem unvorhergesehenen Falle in den Leerlauf zurückgelangt. Damit in einem der genannten Fälle die Regel- und Steuereinheit nicht weiter versucht, den Stellmotor einer Auslenkung des Betätigungsrades folgen zu lassen, kann vorgesehen sein, daß während der Betätigung des Bremslichtschalters sowie gegebenenfalls der Airbagsensoren die Regel- und Steuereinheit bezüglich des Abgleichs der Potentiometer abschaltbar ist.

Schließlich kann auch für das Istwertpotentiometer die Verwendung eines Drehpotentiometers oder Linearpotentiometers in Frage kommen. Ein Linearpotentiometer könnte beispielsweise mit dem mit dem Stellmotor verbindbaren Hebelarm zusammenarbeiten. Zweckmäßig dürfte aber die Anbringung eines zum Stellmotor koaxialen Drehpotentiometers am Stellglied sein.

Weitere Einzelheiten der Erfindung ergeben sich aus der nachfolgenden Beschreibung einer Ausführungsform, die auf der Zeichnung teilweise vereinfacht dargestellt ist. In den Zeichnungen zeigen:
- Figur 1: eine Übersichtsdarstellung der Gesamtvorrichtung;
- Figur 2: eine axiale Schnittansicht des Lenkradbereiches in Explosionsdarstellung;
- Figur 3: eine teilweise axial geschnittene Seitenansicht der Einheit aus Stellmotor und Stellglied in Explosionsdarstellung und
- Figur 4: eine schematische Darstellung der elektrischen Schaltungsanordnung der Vorrichtung.

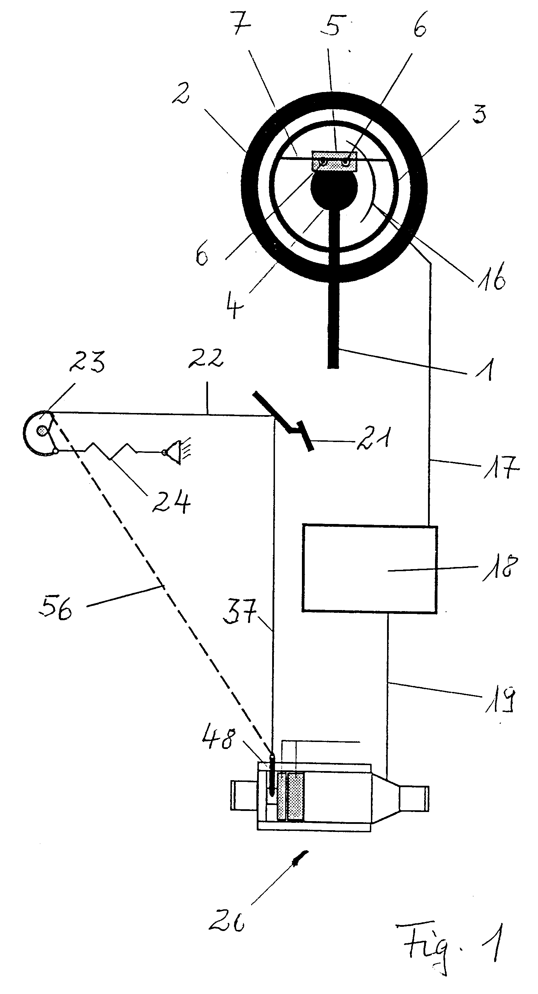

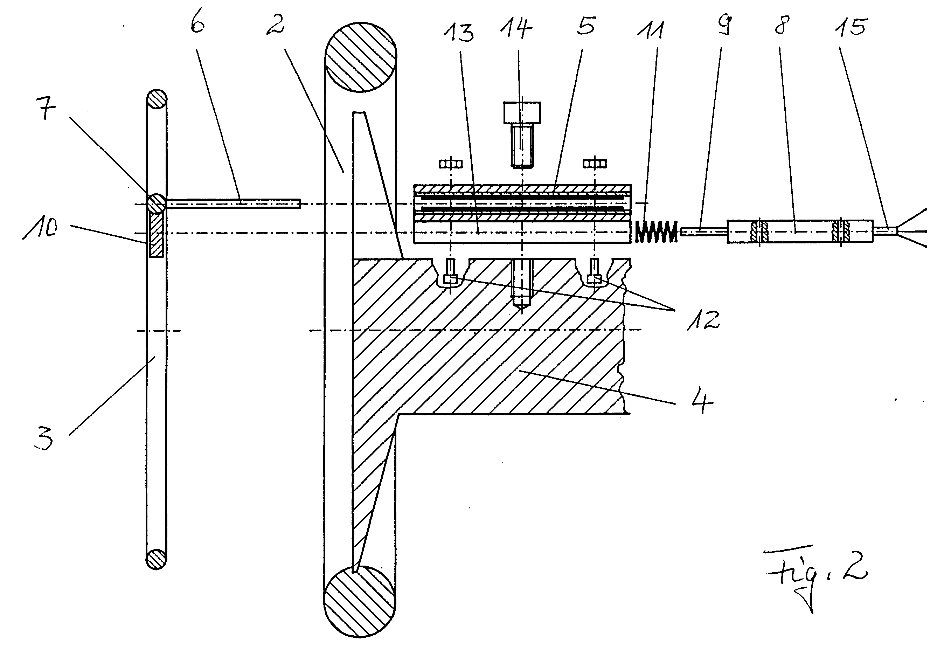

Die Figuren 1 und 2 zeigen ein auf einer Lenksäule 1 sitzendes Lenkrad 2, in dem konzentrisch ein Betätigungsrad 3 angeordnet ist. Auf der Nabe 4 des Lenkrades sitzt ein Gehäuse 5, über welches das Betätigungsrad 3 mittels zweier im wesentlichen zur Zeichenebene der Figur 1 senkrechter Stangen 6 axial verschiebbar ist. Die Stangen 6 sind an einer Sehne 7 befestigt, die das Betätigungsrad 3 oberhalb der Lenkradnabe 4 durchquert.

Wie anhand der Figur 2 näher verdeutlicht, sitzt im oder am Gehäuse 5 das Festteil 8 eines Linearpotentiometers, dessen Stellteil 9 mit einer Lasche 10 verbunden ist, die ebenfalls an der Sehne 7 sitzt. Zweckmäßig liegt das Stellteil 9 zwischen den beiden Stangen 6. Zwischen Feststeil 8 des Linearpotentiometers und Lasche 10 ist eine Rückstellfeder 11 angeordnet, die das Betätigungsrad 3 sowie damit das Stellteil 9 in eine bezogen auf Figur 2 linke Anschlagposition zu bringen trachtet, die dem Leerlauf des Kraftfahrzeugmotors entspricht. Die Anschlagposition kann durch die Beweglichkeit des Stellteiles 9 innerhalb des Festteiles 8 gebildet sein.

Figur 2 zeigt noch Schraubverbindungen 12, mit denen das Festteil 8 am Gehäuse 5 innerhalb eines dortigen Aufnahmeplatzes 13 befestigt ist, sowie eine Schraubverbindung 14 zur Anbringung des Gehäuses 5 auf der Lenkradnabe 4.

Vom Linearpotentiometer 8, 9 geht eine elektrische Leitung 15 auf einen in Figur 1 angedeuteten Schleifring 16, von dem aus eine Leitung 17 weiterführt zu einer Regel- und Steuereinheit 18, auf die später noch im einzelnen eingegangen wird.

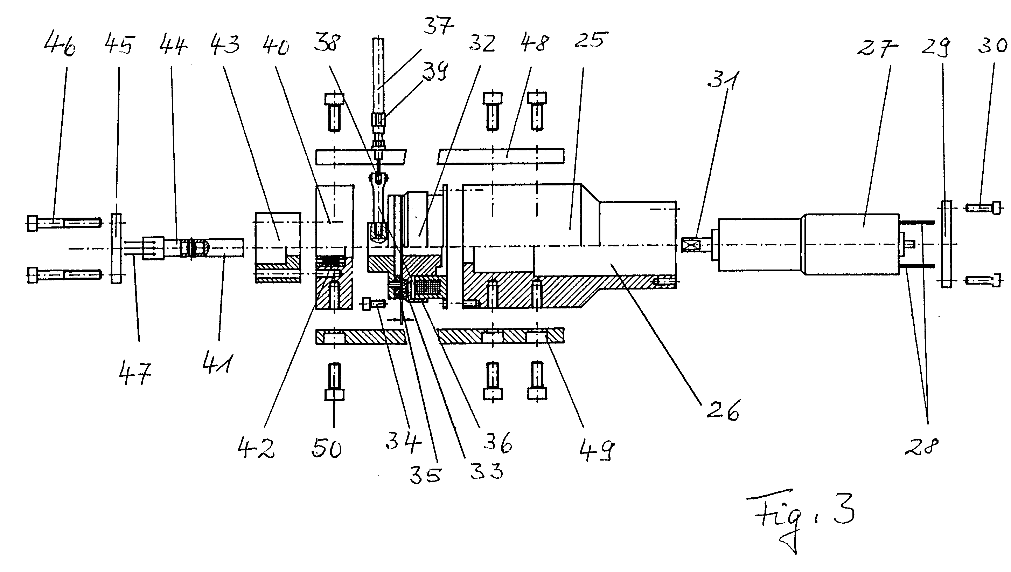

Wie aus den Figuren 1 und 3 ersichtlich, geht von der Regel- und Steuereinheit 18 aus eine elektrische Verbindung 19 zu einer Stelleinheit 20 für das Fahrpedal 21, das im vorliegenden Falle in bekannter Weise über eine Verbindung 22 an die Drosselklappe 23 des Vergasers eines Otto-Motors angeschlossen ist. Eine an der Drosselklappe 23 angreifende Feder 24 sorgt dafür, daß Drosselklappe 23 und Fahrpedal 21 ständig im Sinne einer Rückstellung zur Leerlaufposition für den Fahrzeugmotor belastet sind.

Wie aus Figur 3 ersichtlich, weist die Stelleinheit 20 ein Gehäuse 25 mit einer Ausnehmung 26 zur Aufnahme eines Stellmotors 27 auf, dessen elektrische Anschlüsse 28 über die Leitung 19 mit der Regel- und Steuereinheit 18 verbunden sind. Der Stellmotor 27 wird mittels einer Abschlußplatte 29 im Gehäuse 25 gehalten, wobei die Abschlußplatte 29 über Schrauben 30 am Gehäuse 25 festgelegt ist.

Das freie Ende der Motorwelle 31 ragt in eine elektromagnetische Schaltkupplung 32 und ist dort mit der rechten Kupplungshälfte 33 drehverbunden. Das Kupplungsgehäuse ist mittels Schrauben 34 am Gehäuse 25 angeflanscht.

Die linke Kupplungshälfte 35 ist mit einem Stellglied 36 in Form eines Hebelarmes verbunden, an dessen freiem Ende eine Verbindung 37 zum Fahrpedal 21 bei 38 schwenkbar angelenkt ist. Die Verbindung 37 kann die Form eines Seilzuges oder einer Stange haben, wobei deren Länge über eine Schraube 39 fein einstellbar ist.

Unmittelbar neben der linken Kupplungshälfte 35 und dem Stellglied 36 ist ein Lagersitz 40 für das Stellteil 41 eines Drehpotentiometers angeordnet, wobei das Stellteil 41 in die linke Kupplungshälfte 35 ragt und mit dieser drehverbunden ist. Im Lagersitz 40 ist das Stellteil 41 über ein Nadellager 42 drehbar.

Neben dem Lagersitz 40 befindet sich ein Potentiometersitz 43, in welchem das Festteil 44 des Drehpotentiometers mit Hilfe einer Deckelplatte 45 gehalten ist. Deckelplatte 45, Potentiometersitz 43 sowie Lagersitz 40 sind durch Schrauben 46 miteinander verbunden. Das Drehpotentiometer 41, 44 weist einen elektrischen Anschluß 47 auf, der ebenfalls über die Leitung 19 zur Regel- und Steuereinheit 18 geht.

Die so beschriebene Stelleinheit 20 sitzt zwischen zwei Seitenplatten 48 und 49 und ist mit diesen durch Schrauben 50 verbunden. Die Seitenplatten 48 und 49 können Teil des Kraftfahrzeuggehäuses oder mit diesem verbunden sein.

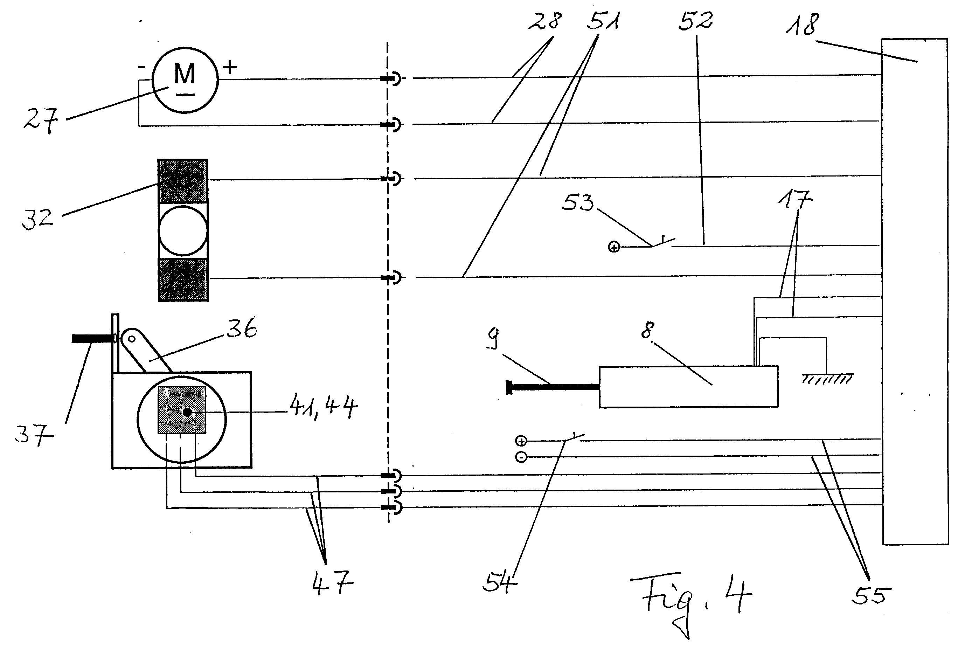

Figur 4 zeigt noch einmal schematisch die elektrische Schaltungsverbindung der beschriebenen Bauteile mit der Regel- und Steuereinheit 18, wobei noch hinzukommt die elektrische Leitungsverbindung 51 zwischen Kupplung 32 und Regel- und Steuereinheit sowie die elektrische Leitungsverbindung 52 zwischen dem Bremslichtschalter 53 und der Regel- und Steuereinheit 18. Mit 54 ist ein Geräteschalter bezeichnet, der über eine Leitung 55 mit der Regel- und Steuereinheit 18 verbunden ist und durch Betätigung des Zündschlüssels für das Kraftfahrzeug geschlossen wird.

Die so anhand der Figuren 1 bis 4 beschriebene Vorrichtung arbeitet folgendermaßen:

Das Kraftfahrzeug bzw. dessen Antriebsmotor seien in Betrieb, das heißt der Geräteschalter 54 ist geschlossen, so daß die anhand der Figuren 1 bis 4 beschriebene Vorrichtung an die Energieversorgung angeschlossen ist.

Soll nun Gas gegeben werden, so wird durch den Fahrer das Betätigungsrad 3 bezogen auf Figur 2 von links nach rechts gedrückt bzw. geschoben, wodurch die Feder gespannt und das Stellteil 9 des Linearpotentiometers 8, 9 ebenfalls von links nach rechts verschoben wird. Der damit erzeugte elektrische Wert geht über den Schleifring 16 und die Leitung 17 auf die Regel- und Steuereinheit 18, die den Wert des Potentiometers 8, 9 mit dem Stellwert des Drehpotentiometers 41, 44 vergleicht. Stimmen die beiden Werte nicht überein, so wird der Stellmotor 27 betätigt solange, bis er über die eingeschaltete Kupplung 32 die Kupplungshälfte 33 und damit das Stellglied 36 sowie das Stellteil 41 des Drehpotentiometers 41, 44 in eine Position gedreht hat, bei der die von den beiden Potentiometern gelieferten Werte übereinstimmen.

Der entsprechende Vorgang spielt sich in umgekehrter Weise beim Loslassen des Betätigungsrades ab, bei dem die Feder 11 dieses Betätigungsrad 3 wieder bezogen auf Figur 2 von rechts nach links bewegt. Hierzu ist der Stellmotor 27 in beiden Richtungen drehbar bzw. drehantreibbar. Für die Gasrücknahme kann aber beispielsweise auch der Antrieb des Stellmotors 27 kurzzeitig abgeschaltet werden, so daß die Rückstellung des Fahrpedals 21 durch die Feder 24 aus Figur 1 geschieht.

Wird aus irgendeiner Fahrposition heraus die Kraftfahrzeugbremse betätigt, so wird damit der Schalter 53 geschlossen, wodurch die Drehverbindung der Kupplung 32 geöffnet wird, so daß mittels der Feder 24 sofort eine Rückstellung des Gaspedals 21 erfolgen kann. Wird danach die Bremse wieder losgelassen, so schließt die Kupplung 32 wieder und es beginnt der Abgleich der Potentiometer von neuem.

Ein Öffnen der Kupplung 32 kommt auch in nicht näher dargestellter Weise in Frage, wenn beispielsweise durch einen Unfall verursacht die Airbag-Sensoren ansprechen. Schließlich fällt die Kupplung 32 immer auch dann ab, wenn durch welche Ursache auch immer eine Unterbrechung der Stromversorgung eintritt.

Nachgetragen sei noch insbesondere zur Darstellung gemäß Figur 1, daß durch die Stelleinheit 20 auch der Leistungsregler des Kraftfahrzeugmotors, im vorliegenden Fall die Drosselklappe 23 unmittelbar über eine Verbindung 56 betätigt werden kann, also entweder das Fahrpedal 21 umgangen werden kann, wobei dann die Verbindung 37 fortfallen kann, oder das Fahrpedal 21 mit seinen Anschlußteilen gänzlich entfallen kann.

## Patentansprüche

1. Vorrichtung zur Handbetätigung des Leistungsreglers (21) eines Kraftfahrzeuges mit einem auf der Lenkspindel (1) befestigten Lenkrad (2), ferner mit einem Betätigungsrad (3), das gegenüber dem Lenkrad (2) axial verschiebbar und mit diesem zusammen drehbar ist, sowie mit einer Anordnung zur Übertragung der Axialverschiebung des Betätigungsrades (3) für die Betätigung des Leistungsreglers (21), wozu das am Lenkrad (2) axial verschiebbar geführte Betätigungsrad (3) mit dem Stellteil (9) eines Sollwertpotentiometers (8, 9) verbunden ist, ein durch einen am Kraftfahrzeug befestigten Stellmotor (27) betätigbares Stellglied (36) mit dem Leistungsregler (21) in Verbindung steht, die Position des Stellgliedes (36) durch ein mit ihm bzw. dem Stellmotor (27) verbundenes Istwertpotentiometer (41, 44) abfühlbar ist, sowie der Stellmotor (27) durch eine Regel- und Steuereinheit (18) jeweils bis zum Abgleich der von den Potentiometern (8, 9, 41, 44) gelieferten Werte betätigbar ist,
dadurch gekennzeichnet,
daß das Sollwertpotentiometer (8, 9) an der Lenkradnabe (4) befestigt ist, daß das Betätigungsgrad (3) über von ihm ausgehende, stangenförmige Mittel (6) in einem an der Lenkradnabe (4) befestigten Gehäuse (5) geführt ist, und daß die stangenförmigen Mittel (6) sowie das Stellteil (9) des Sollwertpotentiometers (8, 9) von einer das Betätigungsrad (3) durchquerenden, stabförmigen Sehne (7) ausgehen.

2. Vorrichtung nach Anspruch 1,
dadurch gekennzeichnet,
daß das Betätigungsrad (3) über wenigstens zwei von ihm ausgehende, achsparallele Stangen (6) in dem an der Lenkradnabe (4) befestigten Gehäuse (5) geführt ist.

3. Vorrichtung nach Anspruch 1 oder 2,
dadurch gekennzeichnet,
daß das Festteil (8) des Sollwertpotentiometers (8, 9) am Gehäuse angeordnet ist.

4. Vorrichtung nach einem der Ansprüche 1 bis 3,
dadurch gekennzeichnet,
daß das Betätigungsrad (3) aus einer Ruheposition gegen die Wirkung einer Rückstellkraft (11) verschiebbar ist.

5. Vorricht nach Anspruch 4,
dadurch gekennzeichnet,
daß das Betätigungsrad (3) gegen die Wirkung einer am Festteil (8) des Sollwertpotentiometers (8, 9) abgestützen Rückstellfeder (11) verschiebbar ist.

6. Vorrichtung nach einem der Ansprüche 1 bis 5,
dadurch gekennzeichnet,
daß das Sollwertpotentiometer ein Linear- (8, 9) oder ein Drehpotentiometer ist.

7. Vorrichtung nach einem der Ansprüche 1 bis 6,
dadurch gekennzeichnet,
daß die vom Sollwertpotentiometer (8, 9) ausgehende elektrische Leitung (15) über einen Schleifring (16) und Schleifringkontakte mit einer zur Regel- und Steuereinheit (18) führenden Leitung (17) verbunden ist.

8. Vorrichtung nach einem der Ansprüche 1 bis 7,
dadurch gekennzeichnet,
daß der Stellmotor (27) in beiden Richtungen drehantreibbar ist.

9. Vorrichtung nach einem der Ansprüche 1 bis 8,
dadurch gekennzeichnet,
daß der Stellmotor ein Elektromotor (27) ist.

10. Vorrichtung nach einem der Ansprüche 1 bis 8,
dadurch gekennzeichnet,
daß der Stellmotor ein Hydraulikmotor ist.

11. Vorrichtung nach einem der Ansprüche 1 bis 10,
dadurch gekennzeichnet,
daß das Stellglied des Stellmotors (27) ein durch den Stellmotor (27) verschwenkbarer Hebelarm (36) ist, und daß am freien Ende des Hebelarmes (36) ein vom Leistungsregler (21) ausgehendes Verbindungsglied angelenkt ist.

12. Vorrichtung nach Anspruch 11,
dadurch gekennzeichnet,
daß das Verbindungsglied (37) ein starres Bauteil ist.

13. Vorrichtung nach einem der Ansprüche 1 bis 12,
dadurch gekennzeichnet,
daß die Regel- und Steuereinheit eine elektrische Regel- und Steuereinheit ist.

14. Vorrichtung nach einem der Ansprüche 1 bis 13,
dadurch gekennzeichnet,
daß zwischen Stellmotor (27) und Stellglied (36) eine durch die Regel- und Steuereinheit (18) schaltbare Kupplung (32) angeordnet ist.

15. Vorrichtung nach Anspruch 14,
dadurch gekennzeichnet,
daß die Kupplung (32) elektrisch gegen die Wirkung einer sie lösenden Kraft einschaltbar ist.

16. Vorrichtung nach einem der Ansprüche 1 bis 15,
dadurch gekennzeichnet,
daß die Regel- und Steuereinheit (18) mit dem Bremslichtschalter (53) sowie gegebenenfalls mit Airbag-Sensoren in Verbindung steht, und daß bei deren Betätigung das Stellglied (36) durch den Stellmotor (27) sowie das Istwertpotentiometer (41, 44) in die dem Leerlauf des Kraftfahrzeugantriebes entsprechende Position rückführbar und/oder die Kupplung (32) lösbar ist.

17. Vorrichtung nach Anspruch 16,
dadurch gekennzeichnet,
daß während der Betätigung des Bremslichtschalters (53) sowie gegebenenfalls der Airbag-Sensoren die Regel- und Steuereinheit (18) bezüglich des Abgleichs der Potentiometer (8, 9; 41, 44) abschaltbar ist.

18. Vorrichtung nach einem der Ansprüche 1 bis 17,
dadurch gekennzeichnet,
daß das Istwertpotentiometer ein Dreh- (41, 44) oder ein Linearpotentiometer ist.

## Claims

1. Device for manually operating the output regulator (21) of a motor vehicle with a steering wheel (2) attached to the steering shaft (1), with an operating wheel (3), which can be displaced axially with respect to the steering wheel (2) and rotated with the latter, and with an arrangement to transmit the axial displacement of the operating wheel (3) for operating the output regulator (21), for which purpose the operating wheel (3), which is guided such that it can be displaced axially at the steering wheel (2), is connected to the adjustable part (9) of a set value potentiometer (8, 9), an actuating member (36), which can be operated by a servomotor (27) attached to the motor vehicle, is connected to the output regulator (21), the position of the actuating member (36) can be sensed by an actual value potentiometer (41, 44), which is connected to the latter or to the servomotor (27), and the servomotor (27) can be operated by a regulating and control unit (18) in each case until the values delivered by the potentiometers (8, 9, 41, 44) are balanced, characterised in that the set value potentiometer (8, 9) is attached to the steering wheel hub (4), that the operating wheel (3) is guided via bar-shaped means (6) extending from it in a housing (5), which is attached to the steering wheel hub (4), and that the bar-shaped means (6) as well as the adjustable part (9) of the set value potentiometer (8, 9) extend from a rod-shaped chord (7) which passes across the operating wheel (3).

2. Device according to claim 1, characterised in that the operating wheel (3) is guided via at least two paraxial bars (6) extending from it in the housing (5) attached to the steering wheel hub (4).

3. Device according to claim 1 or 2, characterised in that the fixed part (8) of the set value potentiometer (8, 9) is disposed on the housing.

4. Device according to one of claims 1 to 3, characterised in that the operating wheel (3) can be displaced out of a rest position against the action of a restoring force (11).

5. Device according to claim 4, characterised in that the operating wheel (3) can be displaced against the action of a return spring (11) supported at the fixed part (8) of the set value potentiometer (8, 9).

6. Device according to one of claims 1 to 5, characterised in that the set value potentiometer is a linear (8, 9) or a rotary potentiometer.

7. Device according to one of claims 1 to 6, characterised in that the electrical line (15) extending from the set value potentiometer (8, 9) is connected via a slip ring (16) and slip ring contacts to a line (17) leading to the regulating and control unit (18).

8. Device according to one of claims 1 to 7, characterised in that the servomotor (27) can be driven to rotate in both directions.

9. Device according to one of claims 1 to 8, characterised in that the servomotor is an electric motor (27).

10. Device according to one of claims 1 to 8, characterised in that the servomotor is a hydraulic motor.

11. Device according to one of claims 1 to 10, characterised in that the actuating member of the servomotor (27) is a lever arm (36) which can swivel by means of the servomotor (27), and that a connecting member, which extends from the output regulator (21), is articulated to the free end of the lever arm (36).

12. Device according to claim 11, characterised in that the connecting member (37) is a rigid component.

13. Device according to one of claims 1 to 12, characterised in that the regulating and control unit is an electrical regulating and control unit.

14. Device according to one of claims 1 to 13, characterised in that a coupling (32), which can be switched in by the regulating and control unit (18), is disposed between the servomotor (27) and the actuating member (36).

15. Device according to claim 14, characterised in that the coupling (32) can be electrically engaged against the action of a force which disengages it.

16. Device according to one of claims 1 to 15, characterised in that the regulating and control unit (18) is connected to the stop light switch (53) and, if applicable, to air bag sensors, and that when these are operated the actuating member (36) can be returned by the servomotor (27) and the actual value potentiometer (41, 44) to the position corresponding to the no-load operation of the motor vehicle drive and/or the coupling (32) can be disengaged.

17. Device according to claim 16, characterised in that the regulating and control unit (18) can be disabled with respect to balancing the potentiometers (8, 9; 41, 44) during operation of the stop light switch (53) and, if applicable, of the air bag sensors.

18. Device according to one of claims 1 to 17, characterised in that the actual value potentiometer is a rotary (41, 44) or a linear potentiometer.

## Revendications

1. Dispositif pour l'actionnement manuel d'un régulateur de puissance (21) d'un véhicule automobile comportant un volant (2) fixé sur la colonne de direction (1), et comportant en outre une roue d'actionnement (3), qui peut être déplacée axialement par rapport au volant (2) et tourner conjointement avec ce dernier, ainsi qu'un dispositif pour transmettre le déplacement axial de la roue d'actionnement (3) pour l'actionnement du régulateur de puissance (21), et dans lequel à cet effet la roue d'actionnement (3) guidée de manière à être déplaçable axialement sur le volant (2), est reliée à un potentiomètre à valeur de consigne (8,9), un organe de réglage (36), pouvant être actionné par un servomoteur (27) fixé sur le véhicule automobile, et relié au régulateur de puissance (21), la position de l'organe de réglage (36) peut être détectée par un potentiomètre à valeur réelle (41,44) relié à cet organe de réglage ou au servomoteur (27), et le servomoteur (27) peut être actionné par une unité de régulation et, de commande (18) respectivement jusqu'à l'égalisation des valeurs délivrées par les potentiomètres (8,9,41,44),
caractérisé en ce
que le potentiomètre à valeur de consigne (8,9) est fixé au moyeu (4) du volant, que la roue d'actionnement (3) est guidée par l'intermédiaire de moyens (6) en forme de barres, qui sortent de cette roue, dans un boîtier (5) fixé au moyeu (4) du volant, et que les moyens en forme de tige (6) ainsi que la partie de réglage (9) du potentiomètre à valeur de consigne (8,9) s'étendent au-delà d'une corde (7) en forme de barre, qui traverse la roue d'actionnement (3).

2. Dispositif selon la revendication 1, caractérisé en ce que la roue d'actionnement (3) est guidée sur au moins deux tiges parallèles (6), qui ressortent de cette roue, dans le boîtier (5) fixé au moyeu (4) du volant.

3. Dispositif selon la revendication 1 ou 2, caractérisé en ce que la partie fixe (8) du potentiomètre à valeur de consigne (8,9) est disposée sur le boîtier.

4. Dispositif selon l'une des revendications 1 à 3, caractérisé en ce que la roue d'actionnement (3) peut être déplacée depuis une position de repos à l'encontre de l'action d'un ressort de rappel (11).

5. Dispositif selon la revendication 4, caractérisé en ce que la roue d'actionnement (3) est déplaçable à l'encontre de l'action d'un ressort de rappel (11), qui prend appui sur la partie fixe (8) du potentiomètre à valeur de consigne (8,9).

6. Dispositif selon l'une des revendications 1 à 5, caractérisé en ce que le potentiomètre à valeur de consigne est un potentiomètre linéaire (8,9) ou un potentiomètre rotatif.

7. Dispositif selon l'une des revendications 1 à 6, caractérisé en ce que la puissance électrique (15) délivrée par le potentiomètre à valeur de consigne (8,9) est reliée par l'intermédiaire d'une bague coulissante (16) et de contacts de la bague coulissante à une ligne (17) qui aboutit à l'unité de régulation et de commande (18).

8. Dispositif selon l'une des revendications 1 à 7, caractérisé en ce que le servomoteur (27) peut être entraîné en rotation dans les deux sens.

9. Dispositif selon l'une des revendications 1 à 8, caractérisé en ce que le servomoteur est un moteur électrique (26).

10. Dispositif selon l'une des revendications 1 à 8, caractérisé en ce que le servomoteur est un moteur hydraulique.

11. Dispositif selon l'une des revendications 1 à 10, caractérisé en ce que l'organe de réglage du servomoteur (27) est un bras de levier (36) pouvant pivoter sous l'action du servomoteur (27) et qu'un organe de liaison partant du régulateur de puissance (21) est articulé sur l'extrémité libre du levier (36).

12. Dispositif selon la revendication 11, caractérisé en ce que l'organe de liaison (37) est un composant rigide.

13. Dispositif selon l'une des revendications 1 à 12, caractérisé en ce que l'unité de régulation et de commande est une unité de régulation et de commande électrique.

14. Dispositif selon l'une des revendications 1 à 13, caractérisé en ce qu'entre le servomoteur (27) et l'organe de réglage (36) est disposé un accouplement (32) pouvant être activé par l'unité de régulation et de commande (18).

15. Dispositif selon la revendication 14, caractérisé en ce que l'accouplement (32) peut être activé électriquement à l'encontre de l'action de force qui ouvre l'accouplement.

16. Dispositif selon l'une des revendications 1 à 15, caractérisé en ce que l'unité de réglage et de commande (18) est reliée à des interrupteurs de feux stop (53) et éventuellement à des capteurs d'air-bag, et que lors de l'actionnement de cette unité, l'organe de réglage (36) peut être ramené par le servomoteur (27) ainsi que par le potentiomètre à valeur réelle (41,44), dans la position qui correspond au ralenti du système d'entraînement du véhicule automobile et/ou de l'accouplement désenclenché.

17. Dispositif selon la revendication 16, caractérisé en ce que pendant l'actionnement de l'interrupteur des feux stop (53) ainsi qu'éventuellement des capteurs des air-bag, l'unité de régulation et de commande (18) peut être débranchée en rapport avec l'équilibrage des potentiomètres (8,9;41,44).

18. Dispositif selon l'une des revendications 1 à 17, caractérisé en ce que le potentiomètre à valeur réelle est un potentiomètre rotatif (41,44) ou un potentiomètre linéaire.
